# EUROPEAN PATENT APPLICATION

(11) **EP 2 117 206 A2**
(43) Date of publication of application: **11.11.2009**
(21) Application number: 08022216.9
(22) Date of filing: 19.12.2008
(51) Int. Cl.: H04M 1/67, H04M 1/73

(54) **Mobile apparatus with reduced power consumption**

(30) Priority: 09.05.2008 JP 2008123213
(71) Applicant: Kabushiki Kaisha Toshiba, Minato-ku Tokyo (JP)
(72) Inventor: Kajiya, Hirokatsu, Tokyo (JP); Arai, Masaaki, Tokyo (JP); Tokuda, Yoshinori, Tokyo (JP)
(74) Representative: HOFFMANN EITLE

(57) **Abstract**

According to one aspect of the invention, there is provided a mobile apparatus (1) including: a display (13); an input module (15); a timer configured to output a first signal representing that a first time elapses since the input module is last operated, and to output a second signal representing that a second time elapses since the input module is last operated, the first time being different from the second time; a display control module configured to disable a display on the display when the first signal is received; and an input control module configured to disable an input at the input module when the second signal is received.

## Description

### BACKGROUND

### Field of the Invention

One aspect of the present invention relates to a mobile apparatus cable of preventing unnecessary power consumption caused by exiting a sleep mode due to an unintended key operation by a user when the mobile apparatus is continuously kept in an unoperated state to change to the sleep mode.

### Description of the Related Art

A small-size and portable mobile apparatus is carried by a user. When the user is away from the mobile apparatus, the user generally performs operation lock on the mobile apparatus. However, occasionally, the mobile apparatus may be left without performing the operation lock. In this case, when the mobile apparatus is used by a third person other than the user, personal information stored in the mobile apparatus may leak.

There is proposed an information processing apparatus for carrying out operation lock by determining that there is a possibility that the information processing apparatus is left behind depending on properties of processing operation when the information processing apparatus carries out the processing operation (see JP-A-2006-222567). The information processing apparatus carries out the operation lock when a prescribed time elapses in a closed state where casings are closed, or a prescribed time elapses in a user operation wait mode and if processing operated in the apparatus is started without the operation by the user and the processing is one awaiting the operation by the user and/or only when the processing is one with low priority.

When an operation key of the mobile apparatus is pressed by something in a bag or a pocket although the operation lock has been performed on the mobile apparatus, the mobile apparatus mis-detects the key operation and then a display system or the like is turned on in spite of the mobile apparatus unused by the user. The unused mobile apparatus is set in a sleep mode (power off functions that do not need to be operated) to suppress power consumption to the minimum. Even in the sleep mode, when the key operation is mis-detected, a control circuit operates to turn on a display system such as a display or the like and thus unnecessary power is consumed.

### SUMMARY

One of objects of the invention is to provide a mobile apparatus cable of preventing unnecessary power consumption caused by exiting a sleep mode due to an unintended key operation by a user when the mobile apparatus is continuously kept in an unoperated state to change to the sleep mode, although the user forgets setting the key operation to be disabled.

According to one aspect of the invention, there is provided a mobile apparatus including: a display; an input module; a timer configured to output a first signal representing that a first time elapses since the input module is last operated, and to output a second signal representing that a second time elapses since the input module is last operated, the first time being different from the second time; a display control module configured to disable a display on the display when the first signal is received; and an input control module configured to disable an input at the input module when the second signal is received.

The mobile apparatus may further include a wait module configured to change a mode of the mobile apparatus to a sleep mode when the first signal is received, the sleep mode representing a mode where minimal necessary functions are activated.

The first time may be shorter than the second time; and the display control module may be configured to enable the display when the input module is operated between receipt of the first signal and the second signal.

The input control module may be configured to enable the input module when a given operation is performed.

The mobile apparatus may further include an input receiving module configured to receive input of at least one of the first time and the second time.

According to another aspect of the invention, there is provided a mobile apparatus including: a display; an input module; a display control module configured to disable a display on the display when a first time elapses since the input module is last operated; and an input control module configured to disable an input at the input module when a second time elapses since the input module is last operated.

The mobile apparatus may further include a wait module configured to change a mode of the mobile apparatus to a sleep mode when the first time elapses since the input module is last operated, the sleep mode representing a mode where minimal necessary functions are activated.

The first time may be shorter than the second time; and the display control module is configured to enable the display when the input module is operated in a time between the first time and the second time.

The input control module is configured to enable the input module when a given operation is performed.

The mobile apparatus may further include an input receiving module configured to receive input of at least one of the first time and the second time.

### BRIEF DESCRIPTION OF THE DRAWINGS

Embodiment may be described in detail with reference to the accompanying drawings, in which:
Fig. 1 is an exemplary perspective view illustrating a mobile apparatus (mobile phone) according to an embodiment of the invention;
Fig. 2 is an exemplary functional block diagram of the mobile apparatus according to the embodiment;
Fig. 3 is an exemplary diagram illustrating an input display screen;
Fig. 4 is an exemplary data configuration diagram illustrating setting information;
Fig. 5 is an exemplary concept diagram illustrating a non-operation lock setting process in the mobile apparatus according to the embodiment;
Fig. 6 is an exemplary flowchart illustrating a procedure of the non-operation lock settingprocess in the mobile apparatus according to the embodiment;
Fig. 7 is an exemplary data configuration diagram illustrating setting information;
Fig. 8 is an exemplary concept diagram illustrating a non-operation lock setting process in the mobile apparatus according to the embodiment; and
Fig. 9 is an exemplary flowchart illustrating a procedure of a non-operation lock setting process in the mobile apparatus according to the embodiment.

### DETAILED DESCRIPTION OF THE EMBODIMENTS

### (First Embodiment)

An embodiment of a mobile apparatus according to the invention will be described with reference to the accompanying drawings. As the mobile apparatus according to the invention, a straight type mobile phone 1 formed of a single casing will be described by way of example. The type of the mobile phone 1 is not limited to the straight type, and may be any type such as a clamshell type of openably coupling a plurality of casings, a swivel type of coupling a plurality of casings in a two-axis-swivel manner, and a sliding type of slidably coupling a plurality of casings.

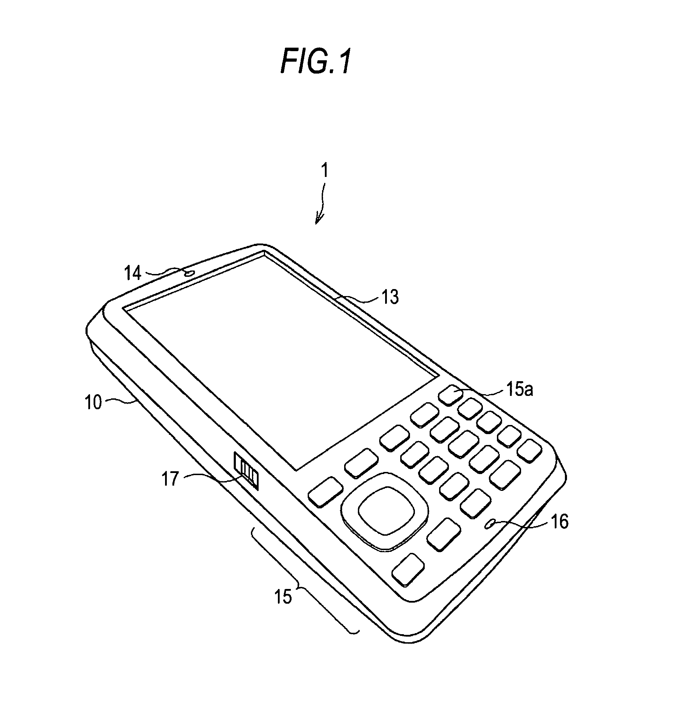

Fig. 1 is a perspective view illustrating a mobile phone 1. As shown in Fig. 1, the mobile phone 1 has a plate-shaped casing 10. A display 13 for displaying information such as characters or images and a speaker 14 for outputting sound are provided on one face of the casing 10. Operation keys 15 such as a cross key for moving a cursor up, down, left, and right, number keys for inputting numerals, a call key for starting a phone call, an end key for ending a phone call, a mail sending key for sending an email; and a power key 15a for turning power on or off are provided on the one face of the casing 10. In addition, a microphone 16 for collecting sound is provided on the one face of the casing 10. The display 13, the speaker 14, the operation keys 15, and the microphone 16 are always exposed to the outside of the mobile phone 1.

A sliding key 17 is provided on a side face of the casing 10. The sliding key 17 is generally fixed at a normal position by elastic force or the like of a spring, but the sliding key 17 can be slid only when stress is applied by a user. The sliding key 17 is a key for locking display on the display 13 or input of the operation keys 15 in the mobile phone 1, or for releasing the locking. The sliding key 17 is provided to be generally exposed to the outside of the mobile phone 1. However, the sliding key 17 is designed not to be slid as long as stress of a certain value is not applied. Accordingly, only when the user intends to slide the sliding key 17, the sliding key 17 is slid. For example, when the mobile phone 1 is put in a bag or a pocket, the sliding key 17 is not slid by colliding with something.

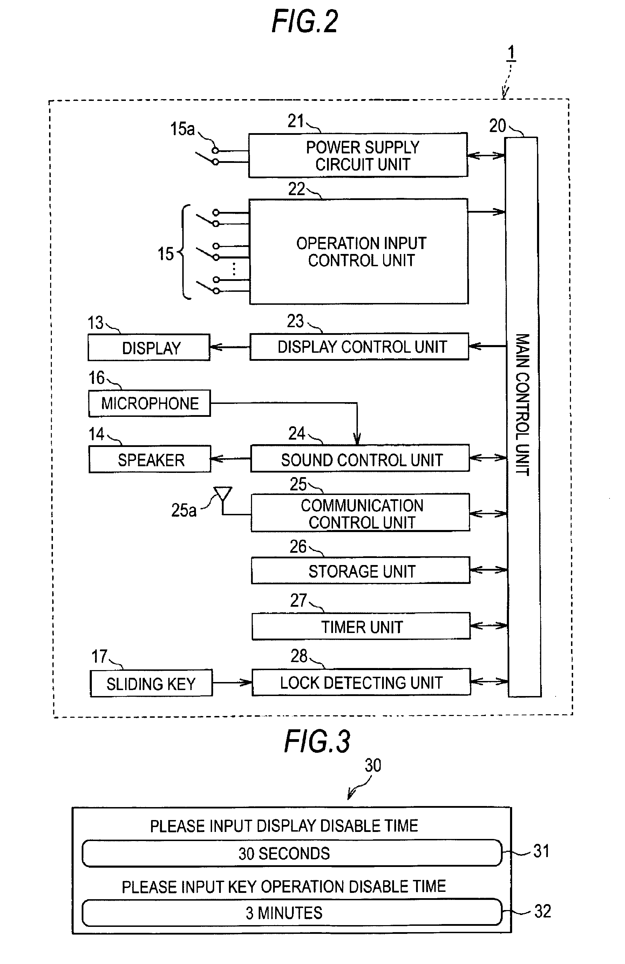

Functions of the mobile phone 1 will be described with reference to a functional block diagram shown in Fig. 2. As shown in Fig. 2, the mobile phone 1 includes a main control unit 20, a power supply circuit unit 21, an operation input control unit 22, a display control unit 23, a sound control unit 24, a communication control unit 25, a storage unit 26, a timer unit 27, and a lock detecting unit 28, which are connected to communicate with each other by a bus.

The main control unit 20 having a Central Processing Unit (CPU) generally controls the mobile phone 1, and performs a non-operation lock process and the other various operation processes and control process. The power supply circuit unit 21 has an input interface for the power key 15a. When it is detected that the power key 15a is pressed by a user, the power supply circuit unit 21 generates a signal of the detection and transmits the signal to the main control unit 20. The power supply circuit unit 21 having a power supply source (battery, etc.) turns the mobile phone 1 on or off based on the input of the power key 15a. When the power is turned on, the power supply circuit unit 21 supplies electric power from the power supply source to each unit, thereby operating the mobile phone 1.

The operation input control unit 22 has an input interface for the operation keys 15. When the operation input control unit 22 detects that any one of the operation keys 15 is pressed, the operation input control unit 22 generates a signal indicating the pressed operation key 15 and transmits the signal to the main control unit 20. The operation input control unit 22 disables or enables the input of the operation keys 15 based on the control of the main control unit 20. When the operation input control unit 22 disables the input of the operation keys 15, the operation control unit 22 does not detect that the operation keys 15 are pressed, by electrically isolating the operation keys 15. Accordingly, the power consumption of the mobile phone 1 can be reduced by disabling the input of the operation keys 15.

The display control unit 23 having a display interface for the display 13 displays document data or image data on the display 13 based on the control of the main control unit 20. The display control unit 23 disables or enables the display of the display 13 based on the control of the main control unit 20.

The sound control unit 24 generates an analog sound signal from the sound collected by the microphone 16 based on the control of the main control unit 20, and converts the analog sound signal into a digital sound signal. When the sound control unit 24 acquires the digital sound signal, the sound control unit 24 converts the digital sound signal into an analog sound signal to output the analog sound signal from the speaker 14, based on the control of the main control unit 20.

The communication control unit 25 performs spectrum despreading on the reception signal received from a base station (not shown) through an antenna 25a to restore data based on the control of the main control unit 20. The data is transmitted to the sound control unit 24 and is output from the speaker 14, the data is transmitted to the display control unit 23 and is displayed on the display 13, or the data is stored in the storage unit 26, by the instruction of the main control unit 20. When the communication control unit 25 acquires the sound data collected by the microphone 16, the data input through the operation keys 15, or the data stored in the storage unit 26, the communication control unit 25 performs spectrum despreading on the data and transmits the data to the base station through the antenna 25a, based on the control of the main control unit 20.

The storage unit 26 includes a Read Only Memory (ROM) for the process performed by the main control unit 20, a hard disk, a non-volatile memory, a database, a Random Access Memory (RAM) for temporarily storing data used for the process performed by the main control unit 20, and the like. Programs for a non-operation lock setting process performed by the main control unit 20 are stored, for example, in the ROM.

The timer unit 27 starts counting a time by receiving a signal for starting a timer from the main control unit 20, and generates a signal indicating the end of the timer based on lapse of a certain time to transmit the signal to the main control unit 20. The timer unit 27 resets the time of the timer to 0 and restarts the timer, by receiving the signal for resetting and starting the reset timer from the main control unit 20. In this case, the timer unit 27 starts a display disable timer for disabling the displaying of the display 13 in the unoperated state or a key operation disable timer for disabling the key operation of the operation keys 15 in the unoperated state.

The lock detecting unit 28 has an input interface for the sliding key 17. When the lock detecting unit 28 detects that the sliding key 17 is slid, the lock detecting unit 28 generates a signal indicating the sliding of the sliding key 17 and transmits the signal to the main control unit 20. The main control unit 20 receiving the signal from the lock detecting unit 28 sets locking to disable the display or the key operation in the mobile phone 1, or releases the locking.

When the mobile phone 1 has not been operated for a certain time, a mode of the mobile phone 1 is changed to a sleep mode. The sleep mode is a waiting mode with power consumption suppressed, and a mode where power of all functions except for minimal necessary functions is turned off. In the sleep mode of the mobile phone 1, for example, when any one of the operation keys 15 is pressed, the mobile phone 1 exits the sleep mode and is changed to the normal mode which is a mode just before the change to the sleep mode.

In the sleep mode of the known mobile phone, for example, even when the operation keys 15 contacts something while the user does not intend to do so, the known mobile phone returns from the sleep mode to the normal mode. Accordingly, for example, when a user has the mobile phone in a bag or a pocket and when any one of the operation keys 15 is pressed involuntarily, the mobile phone 1 returns to the normal mode, thereby increasing current (power) consumption.

To prevent this consumption, the mobile phone 1 has a non-operation lock setting function of disabling the input of the operation keys 15 after a certain time when the operation keys 15 are not operated and the mobile phone 1 is changed to the sleep mode. In the non-operation lock setting function, when an unoperated state where the operation keys 15 are not input in the mobile phone 1 has been kept for a certain time (e.g., time t1) or more, the mobile phone 1 is changed to the sleep mode and disables the display of the display 13. Similarly, when the unoperated state has been kept for a certain time (e.g., time t2) in the mobile phone 1, the mobile phone 1 disables the input of the operation key 15.

The mobile phone 1, for the user, displays an input display screen 30 for inputting a display disable time (t1) indicating a continuing time of the unoperated state until disabling the displaying of the display 13, and a key operation disable time (t2) indicating a continuing time of the unoperated state until disabling the input of the operation keys 15, on the display 13.

As shown in Fig. 3, the input display screen 30 has a display disable time input section 31 for inputting a display disable time, and a key operation disable time input section 32 for inputting a key operation disable time. A user inputs times to the input sections using the operation keys 15. In this case, the user may input the times using the number keys, and may input the times by selecting any time from a plurality of selection items provided on the display 13. For example, according to the input display screen 30 shown in Fig. 3, "30 seconds" is input to the display disable time input section 31, and "3 minutes" is input to the key operation disable time input section 32.

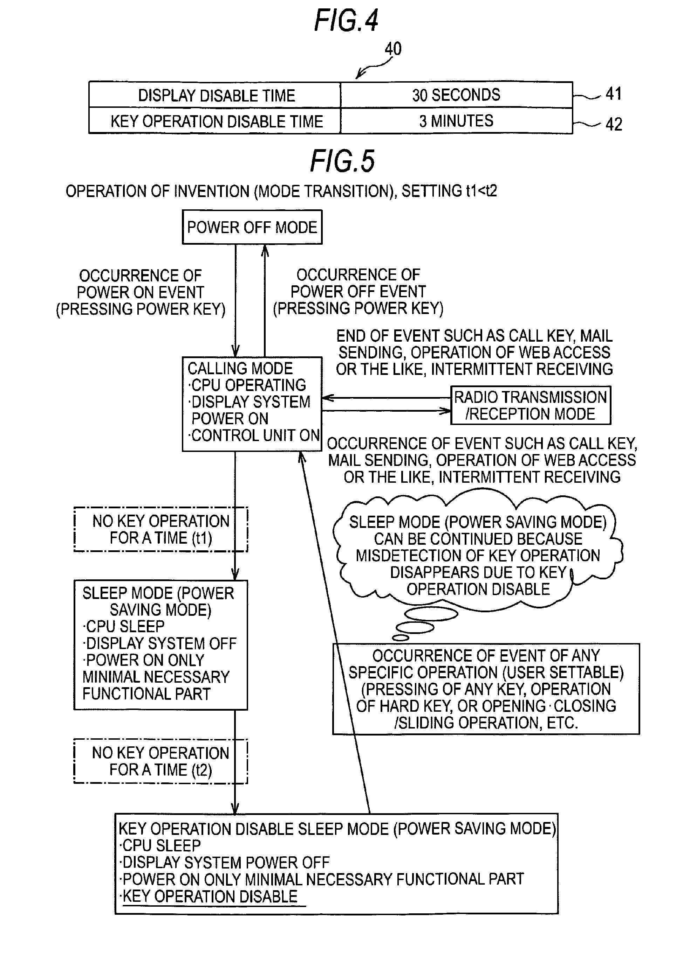

In the setting information 40, the storage unit 26 stores the display disable time and key operation disable time input based on the input display screen 30, as display disable time information 41 and key operation disable time information 42, respectively. For example, in the setting information 40 shown in Fig. 4, "30 seconds" input to the display disable time input section 31 is stored as the display disable time information 41, and "3 minutes" input to the key operation disable time input section 32 is stored as the key operation disable time information 42.

As shown in the setting information 40 in Fig. 4, a case where the key operation disable time (3 minutes) is longer than the display disable time (30 seconds) will be described. As shown in Fig. 5, in the mobile phone 1, the main control unit 20 performs various functions by pressing the operation keys 15, thereby turning on the display system such as the display 13. When the power key 15a of the mobile phone 1 is pressed, the power is turned on or off. When the power is turned on, a power setting function is performed by the main control unit 20 to turn on the display system such as the display 13. When a phone call is started by pressing the call key and then the phone call is ended by pressing the end key, or when sending am email is started by pressing the mail sending key and then the sending of the email is completed, a phone call function or a mail sending function is performed by the main control unit 20 to turn on the display system such as the display 13.

When an unoperated state of the mobile phone 1, that is, any one of operation keys 15 is not pressed, has been kept for a certain time (e.g., time t1), the mobile phone 1 is changed to the sleep mode. When the mobile phone 1 is changed to the sleep mode, the functions except for the minimal necessary functions are turned off, and the display system such as the display 13 is turned off. In this case, when any one of the operation keys 15 is pressed, the mobile phone returns to the normal mode.

The unoperated state of the mobile phone 1 has been further kept for a certain time (e.g. time t2-t1), the mobile phone 1 is changed to a key operation disable sleep mode. In the key operation disable sleep mode, the input of the operation keys 15 is enabled in addition to the sleep mode. Accordingly, for example, even when any one of the operation keys 15 of the mobile phone 1 put in a bag or a pocket is pressed against user' s intend, the sleep mode is kept.

In the key operation disable sleep mode of the mobile phone 1, when a specific operation is performed, the mobile phone 1 returns to the normal mode. The specific operation is that a preset any key is operated (e.g., the sliding key 17 is slid or the like), or is an opening or closing operation in the case of the openable mobile phone.

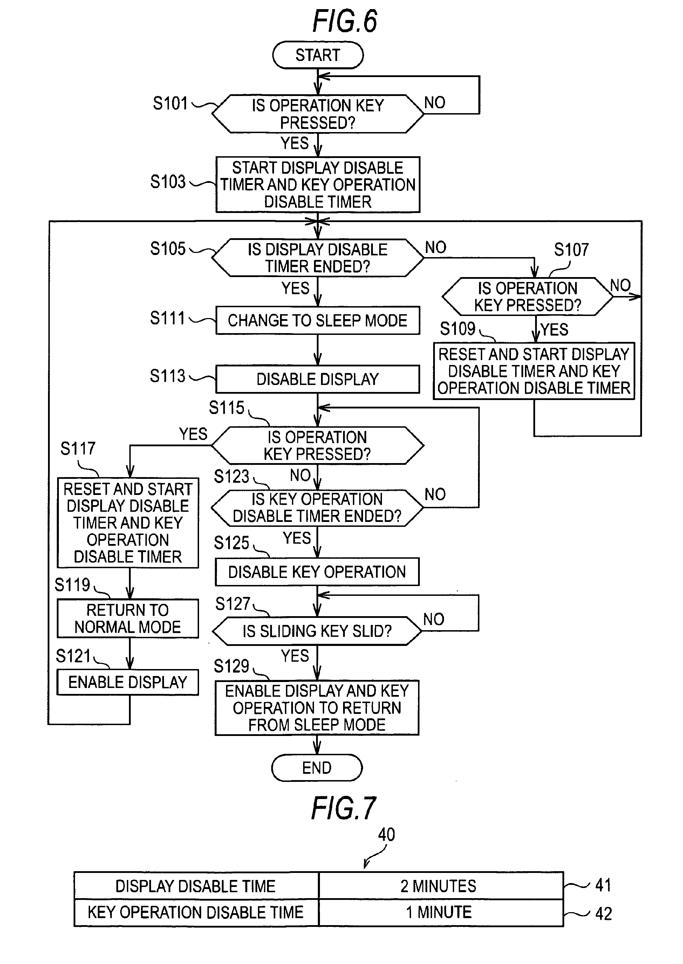

As described above, when the unoperated state of the mobile phone 1 has been kept, the mobile phone 1 is changed to the sleep mode and performs the non-operation lock setting process of the displaying on the display 13 based on the setting information 40 or disabling the input of the operation keys 15. A procedure of the non-operation lock setting process performed by the mobile phone 1 will be described with reference to a flowchart shown in Fig. 6. Hereinafter, for example "Step S101" is represented as "S101" by omitting the word of "Step".

First, the main control unit 20 determines whether or not any one of the operation keys 15 is pressed (S101). When any one of the operation keys 15 is pressed (S101: Yes), the main control unit 20 starts the display disable timer and the key operation disable timer based on the pressing of the operation keys 15 (S103). That is, the main control unit 20 transmits a signal for starting the display disable timer and a signal for starting the key operation disable timer to the timer unit 27. The timer unit 27 receiving the signals starts the display disable timer (e.g., 30 seconds) on the display disable time information 41 of the setting information 40, and starts the key operation disable timer (e.g., 3 minutes) based on the key operation disable time information 42.

The main control unit 20 determines whether or not the display disable timer started in the Step S103, S109, or S117 is ended (S105). At this time, the main control unit 20 determines that the display disable timer is ended, by receiving the signal indicating the end of the display disable timer from the timer unit 27. When the display disable timer is not ended (S105: No), the main control unit 20 determines whether or not any one of the operation keys 15 is pressed (S107). When any one of the operation keys 15 is not pressed (S107: No), the process returns to Step S105 and the main control unit 20 determines whether or not the display disable timer is ended.

When any one of the operation keys 15 is pressed (S107: Yes), the main control unit 20 resets and starts the display disable timer and the key operation disable timer (S109). That is, the main control unit 20 transmits a signal for resetting and starting the display disable timer and a signal for resetting and starting the key operation disable timer to the timer unit 27. The timer unit 27 receiving the signals resets and starts the display disable timer based on the display disable time information 41 of the setting information 40, and the timer unit 27 resets and starts the key operation disable timer based on the key operation disable timer information 42. Returning to Step S105, the main control unit 20 determines whether or not the display disable timer started in Step S109 is ended.

When the display disable timer is ended (S105: Yes), the main control unit 20 changes the mobile phone 1 to the sleep mode (S111). The main control unit 20 disables the displaying of the display 13 (S13). In the unoperated state, unnecessary power consumption in the mobile phone 1 is reduced by changing the mobile phone 1 to the sleep mode.

The main control unit 20 determines whether or not any one of the operation keys 15 is pressed (S115). When any one of the operation keys 15 is pressed (S115: Yes), similarly with Step S109, the main control unit 20 resets and starts the display disable timer and the key operation disable timer (S117).

The main control unit 20 returns the mobile phone 1 to the normal mode (S119). The main control unit 20 enables the displaying of the display 13 disabled in Step S113 (S121). The functions except for the minimal necessary functions turned off in Step S111 are restarted and the display 13 is turned on, by returning the mobile phone 1 to the normal mode. Returning to Step S105, the main control unit 20 determines whether or not the display disable timer started in Step S117 is ended.

When any one of the operation keys 15 is not pressed (S115: No), the main control unit 20 determines whether or not the key operation disable timer started in Step S103, S109, or S117 is ended (S123). At this time, the main control unit 20 determines that the key operation disable timer is ended, by receiving the signal indicating the end of the key operation disable timer from the timer unit 27. When the key operation disable timer is not ended (S123: No), the process returning to Step S115 and the main control unit 20 determines again whether or not any one of the operation keys 15 is pressed.

When the key operation disable timer is ended (S123: Yes), the main control unit 20 disables the key operation (S125). When the key operation is disabled in the mobile phone 1, the operation keys 15 are electrically disconnected by the operation input control unit 22. Accordingly, even when the operation keys 15 are pressed, the operation input control unit 22 does not detects the input thereof. Therefore, even when any one of the operation keys 15 of the mobile phone 1 put in a bag or pocket is pressed against user's intend, it is prevented that unnecessary functions are operated or the display 13 is turned on.

When the user wants to return the mobile phone 1 from the key operation disable sleep mode to the normal mode, the user slides the sliding key 17. Accordingly, the main control unit 20 determines whether or not the sliding key 17 is slid in the key operation disable sleep mode (S127). When the sliding key 17 is not slid (Step S127: No), the main control unit 20 waits until the sliding key 17 is slid.

When the sliding key 17 is slid (S127: Yes), the main control unit 20 enables the displaying of the display 13 disabled in Step S113 and the key operation disabled in Step S125, thereby returning the mobile phone 1 from the sleep mode to the normal mode (S129). That is, the functions except for the minimal necessary functions turned off in Step S111 are restarted and the display 13 is turned on, by returning the mobile phone 1 to the normal mode. In addition, the operation keys 15 are electrically connected by the operation input control unit 22, thereby receiving the input of the operation keys 15. Accordingly, the user can perform the normal operations using the mobile phone 1.

As described above, the unoperated state of the mobile phone 1 has been kept for a certain time, the displaying of the display 13 is disabled and the mobile phone 1 is changed to the sleep mode. Then, when the unoperated state has been further kept for a certain time, the key operation is disabled with the sleep mode kept. In a state of disabling only the displaying of the display 13, the displaying of the display 13 is enabled again by the input of the operation keys 15, and the mobile phone 1 returns to the normal mode. In the state of disabling the key operation, the key operation is enabled again by sliding the sliding key 17, the displaying of the display 13 is enabled, and the mobile phone 1 returns to the normal mode.

Next, as shown in the setting information 40 in Fig. 7, a case where the display disable time (2 minutes) is longer than the key operation disable time (1 minute) will be described. For example, in the setting information 40 shown in Fig. 7, "2 minutes" input to the display disable time input section 31 is stored as the display disable time information 41, and "1 minute" input to the key operation disable time input section 32 is stored as the key operation disable time information 42.

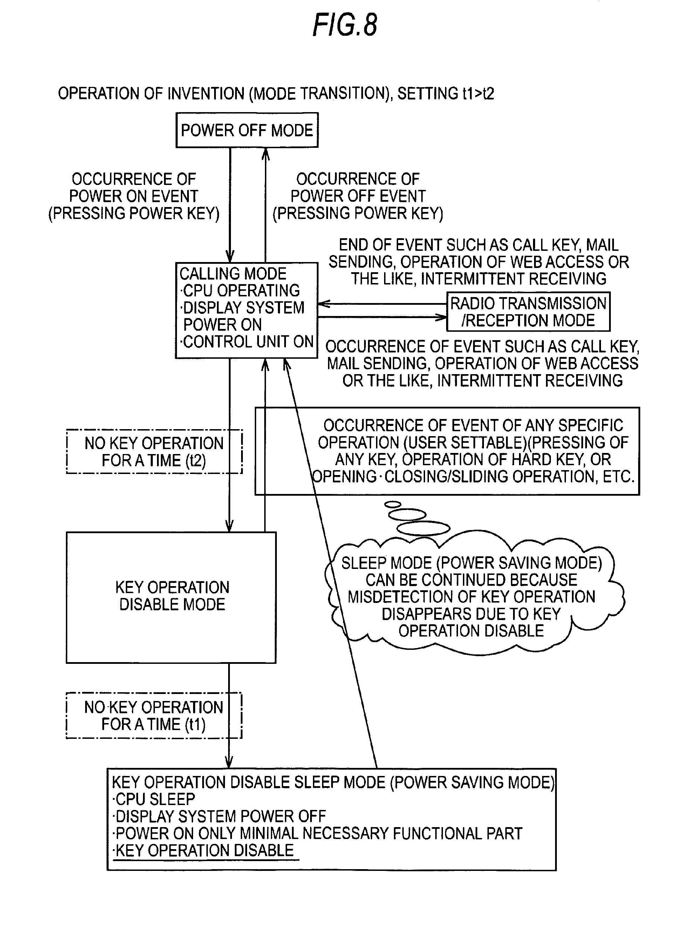

As shown in Fig. 8, when the power key 15a of the mobile phone 1 is pressed, the power is turned on or off. When the power is turned on, a power setting function is performed by the main control unit 20 to turn on the display system such as the display 13. When a phone call is started by pressing the call key and then the phone call is ended by pressing the end key, or when sending a mail is started by pressing the mail sending key and then the sending of the mail is completed, a phone call function or a mail sending function is performed by the main control unit 20 to turn on the display system such as the display 13.

When a unoperated state of the mobile phone 1, that is, any one of operation keys 15 is not pressed, has been kept for a certain time, the mobile phone 1 is changed to the key operation disable mode. In the key operation disable mode, the mobile phone 1 disables the input of the operation keys 15. Accordingly, for example, even when any one of the operation keys 15 of the mobile phone 1 put in a bag or pocket is pressed against user' s intend, the key operation disable mode is kept.

The unoperated state of the mobile phone 1 has been further kept for a certain time, the mobile phone 1 is changed to the key operation disable sleep mode. When the mobile phone 1 is changed to the key operation disable sleep mode, the functions except for the minimal necessary functions are turned off in addition to the disabling of the key operation and the display system such as the display 13 is turned off. At this time, since the key operation is disabled, the mobile phone 1 does not return to the normal mode even when any one of the operation keys 15 is pressed.

In the key operation disable sleep mode of the mobile phone 1, when a preset specific operation is performed, the mobile phone 1 returns to the normal mode. The specific operation is that a preset any key is pressed (e.g., the sliding key 17 is slid or the like), or is an opening or closing operation in the case of the openable mobile phone.

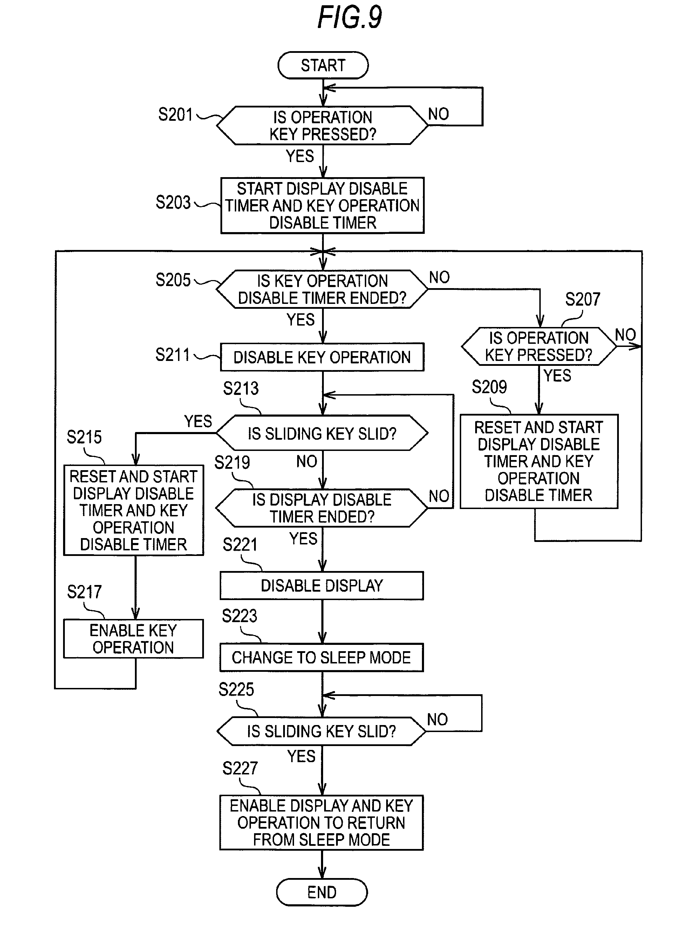

As described above, when the unoperated state of the mobile phone 1 has been kept, the mobile phone 1 is changed to the sleep mode and performs the non-operation lock setting process of the displaying on the display 13 based on the setting information 40 or disabling the input of the operation keys 15. A procedure of the non-operation lock setting process performed by the mobile phone 1 will be described with reference to a flowchart shown in Fig. 9.

First, the main control unit 20 determines whether or not any one of the operation keys 15 is pressed (S201). When any one of the operation keys 15 is pressed (S201: Yes), the main control unit 20 starts the display disable timer and the key operation disable timer based on the pressing of the operation keys 15 (S203). That is, the main control unit 20 transmits a signal for starting the display disable timer and a signal for starting the key operation disable timer to the timer unit 27. The timer unit 27 receiving the signals starts the display disable timer (e.g., 2 minutes) on the display disable time information 41 of the setting information 40, and starts the key operation disable timer (e.g., 1 minutes) based on the key operation disable time information 42.

The main control unit 20 determines whether or not the display disable timer started in the Step S203, S209, or S215 is ended (S205). At this time, the main control unit 20 determines that the key operation disable timer is ended, by receiving the signal indicating the end of the key operation disable timer from the timer unit 27. When the key operation disable timer is not ended (S205: No), the main control unit 20 determines whether or not any one of the operation keys 15 is pressed (S207). When any one of the operation keys 15 is not pressed (S207: No), the process returns to Step S205 and the main control unit 20 determines whether or not the key operation disable timer is ended.

When any one of the operation keys 15 is pressed (S207: Yes), the main control unit 20 resets and starts the display disable timer and the key operation disable timer (S209). That is, the main control unit 20 transmits a signal for resetting and starting the display disable timer and a signal for resetting and starting the key operation disable timer to the timer unit 27. The timer unit 27 receiving the signals resets and starts the display disable timer based on the display disable time information 41 of the setting information 40, and the timer unit 27 resets and starts the key operation disable timer based on the key operation disable timer information 42. Returning to Step S205, the main control unit 20 determines whether or not the key operation disable timer started in Step S209 is ended.

When the key operation disable timer is ended (S205: Yes), the main control unit 20 disables the key operation (S211). When the key operation is disabled in the mobile phone 1, the operation keys 15 are electrically disconnected by the operation input control unit 22. Accordingly, even when the operation keys 15 are pressed, the operation input control unit 22 does not detects the input thereof. Therefore, even when any one of the operation keys 15 of the mobile phone 1 put in a bag or pocket is pressed against user's intend, it is prevented that unnecessary functions are operated or the display 13 is turned on.

The main control unit 20 determines whether or not the sliding key 17 is slid (S213). When the sliding key 17 is slid (Step S213: Yes), similarly with Step S209, the main control unit 20 resets and starts the display disable timer and the key operation disable timer (S215).

Themain control unit 20 enables the keyoperation disabled in Step S211 (S217). The operation keys 15 are electrically connected again by the operation input control unit 22, thereby receiving the input of the operation keys 15. Accordingly, the user can perform the normal operations using the mobile phone 1. Returning to Step S205, the main control unit 20 determines whether or not the key operation disable timer started in Step S215 is ended.

When the sliding key 17 is not slid (S213: No), the main control unit 20 determines whether or not the display disable timer started in Step S203, S209, or S215 is ended (S219). At this time, the main control unit 20 determines that the display disable timer is ended, by receiving the signal indicating the end of the display disable timer from the timer unit 27. When the display disable timer is not ended (S219: No), the process returns to Step S213 and the main control unit 20 determines again whether or not the sliding key 17 is slid.

When the display disable timer is ended (S219: Yes), the main control unit 20 disables the displaying of the display 13 (S221). The main control unit 20 changes the mobile phone 1 to the sleep mode (S223). In the unoperated state, the displaying of the display 13 is not performed or the mobile phone 1 is changed to the sleep mode, thereby reducing unnecessary power consumption of the mobile phone 1.

When the user wants to change the mode of the mobile phone 1 from the key operation disable sleep mode to the normal mode, the user slides the sliding key 17. Accordingly, the main control unit 20 determines whether or not the sliding key 17 is slid in the key operation disable sleep mode (S225). When the sliding key 17 is not slid (Step S225: No), the main control unit 20 waits until the sliding key 17 is slid.

When the sliding key 17 is slid (S225: Yes), the main control unit 20 enables the key operation of the display 13 disabled in Step S221 and the displaying of the display 13 disabled in Step S211, thereby changing the mobile phone 1 from the sleep mode to the normal mode (S227). That is, the functions except for the minimal necessary functions turned off in Step S223 are restarted and the display 13 is turned on, by returning the mobile phone 1 to the normal mode. In addition, the operation keys 15 are electrically connected by the operation input control unit 22, thereby receiving the input of the operation keys 15. Accordingly, the user can perform the normal operations using the mobile phone 1.

As described above, the unoperated state of the mobile phone 1 has been kept for a certain time, the key operation is disabled. Then, the unoperated state has been further kept for a certain time, the displaying of the display 13 is disabled and the mobile phone 1 is changed to the sleep mode. In the state of disabling only the key operation, the key operation is enabled again by sliding the sliding key 17. In the state of disabling the key operation and the displaying of the display 13, the input of the operation keys 15 is enabled by sliding the sliding key 17, the displaying of the display 13 is enabled, and the mobile phone 1 returns to the normal mode.

According to the mobile apparatus (mobile phone 1) of the embodiments, when the unoperated state has been kept and the mobile apparatus is changed to the sleep mode, the mobile apparatus is changed to the key operation disable mode without awareness of the user. Accordingly, it is possible to prevent power from being unnecessarily consumed by exiting the sleep mode by the unintended key operation by the user, even when the user forgets setting the key operation to be disabled.

Since the user can freely set the display disable time until the displaying is disabled (changed to the sleep mode) after the unoperated state of the mobile phone 1 has been kept and the key operation disable time until the key operation is disabled after the unoperated state of the mobile phone 1 has been kept, operability for the user is improved. For example, the key operation disable time may be set long, thereby preventing the key operation from being disabled just after the mobile phone 1 is changed to the sleep mode.

In the case of a mobile phone having a clamshell type of openably coupling a plurality of casings, a swivel type, a sliding type, or the like, the displaying or the key operation may be disabled or the mobile phone may be changed to the sleep mode at the time of opening or closing the casings. As an operation for changing the key operation disable sleep mode of the mobile phone 1, a user may set any operation.

Not to press the power key 15a even when the operations keys 15 of the mobile phone 1 are in contact with something, the power key 15a may be set lower than the other operation keys 15, and only the input of the power key 15a may be received even when the mobile phone 1 is in the key operation disable mode. With such a configuration, for example, when the user wants to power off the mobile phone 1 or wants to check the time, the user can perform only a specific operation using the mobile phone 1 even in the key operation disable mode, by pressing the power key 15a. In this case, lighting may be turned on by pressing the end key, even when the mobile phone 1 is in the key operation disable mode. Even in the key operation disable mode, the user may make an emergency call by pressing the power key and then pressing the emergency numbers (110, 119, 118, etc.) within certain seconds after pressing the power key.

In the key operation disable mode of the mobile phone 1, when there is an incoming call, only the call key or the end key may be enabled. In the key operation disable mode of the mobile phone 1, the operation key 15 for changing volume, the operation key 15 for starting a recording process, or the like may be enabled during the calling. In the key operation disable mode of the mobile phone 1, when an alarm occurs, the operation key 15 for stopping the alarm may be enabled. In the key operation disable mode of the mobile phone 1, when a mail is received, the operation key 15 for stopping a ringtone (vibration for indicating the reception) of the mail may be enabled.

Even in the course of browsing a web site, creating a mail, or reading a mail, when the unoperated state has been kept for a certain time or more, the processes of Steps S101 to S129 or Step S201 to S227 may be performed to prevent personal information from leaking out.

When an external memory such as a memory card is attached or detached, when a USB or charger is attached or detached, when an earphone is attached or detached, or when a close-up mode switch is input, it is not determined that the operation keys 15 are not pressed in Step S101 or Step S201 and the processes of Step S103 to S129 and S203 to S227 may not be performed.

In the course of a telephone call, telephone calling/receiving, alarm sounding, low battery alarm sounding, mail reception completion sounding, stop watch operating, camera operating, voice recorder recording, GPS measuring, connecting Bluetooth (registered trademark) devices, and infrared communicating, Step S103 to S129 and S203 to S227 may be performed at the time of ending these status.

The mobile phone 1 has been described by way of example, but the invention is not limited thereto. For example, the invention is applicable to any mobile apparatuses having a lock function such as a Personal Handyphone System (PHS), a Personal Digital Assistants (PDA), a portable music player, a portable video camera, and a portable game device.

## Claims

1. A mobile apparatus comprising:
a display;
an input module;
a timer configured to output a first signal representing that a first time elapses since the input module is last operated, and to output a second signal representing that a second time elapses since the input module is last operated, the first time being different from the second time;
a display control module configured to disable a display on the display when the first signal is received; and
an input control module configured to disable an input at the input module when the second signal is received.

2. The mobile apparatus of Claim 1, further comprising a wait module configured to change a mode of the mobile apparatus to a sleep mode when the first signal is received, the sleep mode representing a mode where minimal necessary functions are activated.

3. The mobile apparatus of Claim 1 or 2, wherein:
the first time is shorter than the second time; and
the display control module is configured to enable the display when the input module is operated between receipt of the first signal and the second signal.

4. The mobile apparatus of any of Claims 1 to 3, wherein the input control module is configured to enable the input module when a given operation is performed.

5. The mobile apparatus of any of Claims 1 to 4, further comprising an input receiving module configured to receive input of at least one of the first time and the second time.

6. A mobile apparatus comprising:
a display;
an input module;
a display control module configured to disable a display on the display when a first time elapses since the input module is last operated; and
an input control module configured to disable an input at the input module when a second time elapses since the input module is last operated.

7. The mobile apparatus of Claim 6, further comprising a wait module configured to change a mode of the mobile apparatus to a sleep mode when the first time elapses since the input module is last operated, the sleep mode representing a mode where minimal necessary functions are activated.

8. The mobile apparatus of Claim 6 or 7, wherein:
the first time is shorter than the second time; and
the display control module is configured to enable the display when the input module is operated in a time between the first time and the second time.

9. The mobile apparatus of any of Claims 6 to 8, wherein the input control module is configured to enable the input module when a given operation is performed.

10. The mobile apparatus of any of Claims 6 to 9, further comprising an input receiving module configured to receive input of at least one of the first time and the second time.
